# EUROPÄISCHE PATENTSCHRIFT

(11) **EP 2 476 155 B1**
(45) Veröffentlichungstag und Bekanntmachung des Hinweises auf die Patenterteilung: **12.10.2016**
(21) Anmeldenummer: 10742735.3
(22) Anmeldetag: 30.07.2010
(51) Int. Cl.: H01M 8/04223

(54) **VERFAHREN ZUM KALTSTARTEN EINES BRENNSTOFFZELLENSYSTEMS UND BRENNSTOFFZELLENSYSTEM EINES KRAFTFAHRZEUGS**
METHOD FOR COLD STARTING A FUEL CELL SYSTEM AND FUEL CELL SYSTEM OF A MOTOR VEHICLE
PROCÉDÉ POUR LE DÉMARRAGE À FROID D'UN SYSTÈME DE PILES À COMBUSTIBLE ET SYSTÈME DE PILES À COMBUSTIBLE D'UN VÉHICULE AUTOMOBILE

(30) Priorität: 10.09.2009 DE 102009040815; 17.10.2009 DE 102009049761
(43) Veröffentlichungstag der Anmeldung: 18.07.2012
(73) Patentinhaber: Daimler AG, 70327 Stuttgart (DE)
(72) Erfinder: BÖGERSHAUSEN, Clemens, 73773 Aichwald (DE); LEDERBOGEN, Matthias, 89143 Blaubeuren (DE); VOGEL, Bernhard, 70372 Stuttgart (DE)
(74) Vertreter: JENSEN & SON
(86) Internationale Anmeldenummer: PCT/EP2010/004662
(87) Internationale Veröffentlichungsnummer: WO 2011/029499

(56) Entgegenhaltungen:
- WO-A1-2009/010113
- WO-A2-2008/148445
- DE-A1-102006 026 238
- DE-A1-102007 033 429
- JP-A- 2003 109 636

## Beschreibung

Die Erfindung betrifft ein Verfahren zum Kaltstarten eines Brennstoffzellensystems eines Kraftfahrzeugs, insbesondere bei Temperaturen unterhalb des Gefrierpunkts, umfassend zumindest eine Aufwärmphase und eine Warmfahrphase gemäß dem Oberbegriff des Patentanspruchs 1. Ferner richtet sich die Erfindung auf ein Brennstoffzellensystem eines Kraftfahrzeugs gemäß dem Oberbegriff des Patentspruchs 10.

Der Start eines kalten Brennstoffzellensystems unterhalb der Betriebstemperatur, insbesondere bei tiefen Temperaturen unterhalb des Gefrierpunkts, ist ein bekanntes Problem bei einem Brennstoffzellenfahrzeug.

Bei einem Brennstoffzellenfahrzeug kann nach Betätigung der Zündung erst losgefahren werden, wenn eine Fahrfreigabe von einem Steuergerät erteilt wird. Die Fahrfreigabe kann jedoch erst erteilt werden, wenn das Brennstoffzellensystem auf eine ausreichende Betriebstemperatur aufgeheizt worden ist.

Um einen möglichst energieeffizienten Kaltstart zu ermöglichen wird in der Druckschrift WO 2008148445 A2 ein Brennstoffzellensystem mit einer Kaltstarterfassungseinrichtung und mit einer, an den Brennstoffzellenstapel, zuschaltbaren Last vorgeschlagen. Demnach ist eine Steuerungsvorrichtung derart ausgebildet, dass als Reaktion auf die Erfassung des Kaltstartzustands des Brennstoffzellenstapels die zugeschaltete Last mit einem oder mehreren Lastsprüngen variierbar ist. Der Lastsprung kann nach der Fahrfreigabe im dynamischen Betrieb des Fahrzeugs oder vor der Fahrfreigabe während einer Aufwärmphase erfolgen. Diese Aufwärmphase dauert beispielsweise 120 Sekunden.

Leider ist die Anzahl, der dem Brennstoffzellenstapel zuschaltbaren Lasten, insbesondere bei einem mobilen Einsatz, wie beispielsweise einem Kraftfahrzeug, begrenzt, und die elektrischen Verbraucher stehen aufgrund von Betriebsgrenzen nicht uneingeschränkt als Leistungssenken zur Verfügung.

Die DE 10 2006 026238 A1 beschreibt ein Verfahren zum Kaltstarten eines Brennstoffzellensystems eines Kraftfahrzeugs, umfassend zumindest folgende Betriebsphasen:
1) Aufwärmphase: Belasten eines Brennstoffzellenstapels mit wenigstens einem Verbraucher und
2) Warmfahrphase: Erteilen eines Fahrfreigabesignals in Abhängigkeit zumindest einer Einflussgröße,
mit den folgenden Verfahrensschritten:
- Aufnehmen einer bestimmten Quantität einer Abgabeleistung des Brennstoffzellensystems bei der Aufwärmphase und/oder bei der Warmfahrphase durch ein Leistungsaufnahmemittel und
- Umsetzen der aufgenommenen Quantität der Abgabeleistung in Verlustleistung durch Einprägen eines geeigneten Stroms in wenigstens eine zu bestromende Wicklung eines Elektromotors.

Der Erfindung liegt daher die Aufgabe zugrunde, eine Lösung zu schaffen, die es ermöglicht, die Betriebsbereitschaft des Kraftfahrzeugs zu erhöhen.

Erfindungsgemäß wird die auf ein Verfahren gemäß Patentanspruch 1 gerichtete Aufgabe, durch das Aufnehmen einer bestimmten Quantität einer Abgabeleistung des Brennstoffzellensystems bei der Aufwärmphase und/oder bei der Warmfahrphase durch ein Leistungsaufnahmemittel und durch das Umsetzen der aufgenommenen Quantität der Abgabeleistung in Verlustleistung durch Einprägen eines geeigneten Stroms in wenigstens eine zu bestromende Wicklung eines Elektromotors, gelöst, wobei ein erster DC/DC-Wandler zwischen einem Energiespeicher und einem Zwischenkreis angeordnet wird, und zwischen Brennstoffzellenstapel und Zwischenkreis ein zweiter DC/DC-Wandler angeordnet wird und dazu vorgesehen ist, während der Aufwärmphase und/oder der Warmfahrphase eine möglichst niedrige Brennstoffzellenstapelspannung einzuregeln.

Die Abgabeleistung des Brennstoffzellensystems wird als die elektrische Leistung des Brennstoffzellenstapels, abzüglich der Leistungsaufnahme der elektrischen Nebenverbraucher, welche zum Betrieb des Brennstoffzellensystems und/oder des Brennstoffzellenfahrzeugs erforderlich sind, definiert. Elektrische Nebenverbraucher sind beispielsweise ein, oder mehrere Hilfsantrieb(e) des Brennstoffzellensystems, ein HV-Zusatzheizer, gegebenenfalls wenigstens ein Niedervolt-DC/DC-Wandler samt Niedervolt-Bordnetz und Niedervolt-Verbraucher, wie beispielsweise Kabinenluftheizer oder Fahrzeugbeleuchtung.

Ein solches Verfahren ermöglicht somit eine höhere, während einer Aufwärmphase und/oder Warmfahrphase geradezu gewünschte Belastung des Brennstoffzellenstapels durch Ansteuerung einer, in einem Brennstoffzellenfahrzeug bereits vorhandenen Komponente (Leistungsaufnahmemittel) und Umsetzen des eingeprägten Stroms in eine weitere, ebenfalls bereits vorhandene Komponente (wenigstens eine Phasenwicklung eines Elektromotors). Vorteilhaft führt die Durchführung des erfindungsgemäßen Verfahrens zu einer entscheidenden Verkürzung der Dauer der aktuellen Betriebsphase, in der das Verfahren angewendet wird, so dass eine, dem dieser Betriebsphase nacheilende Betriebsphase früher initialisiert werden kann. Wird das erfindungsgemäße Verfahren bereits während der Aufwärmphase angewendet, so kann der Beginn der nachfolgenden Warmfahrphase erheblich nach vorne verlagert werden. Da bei Aktivierung dieser (Warmfahrphase) das Fahrfreigabesignal von einem Algorithmus eines Steuergeräts erteilt wird, kann ein Fahrer unter Einschränkungen bereits losfahren.

Unterschreitet hierbei beispielsweise die Leistungsanforderung eines Traktionsmotors während eines Niederlastbetriebs oder Leerlaufbetriebs einen bestimmten Wert, welcher ein Indikator dafür ist, dass eine höhere Abgabeleistung des Brennstoffzellensystems verfügbar ist, als Antriebsleistung von einem Traktionsmotor aufnehmbar ist, so ist es auch sinnvoll, das erfindungsgemäße Verfahren während der Warmfahrphase anzuwenden, um den Brennstoffzellenstapel maximal zu belasten. Hierdurch kann die Warmfahrphase früher abgeschlossen werden, so dass das Fahrzeug früher vollständig betriebsbereit ist.

Jedoch geht die Anwendung des erfindungsgemäßen Verfahrens mit einer Minderung der Energieeffizienz einher, da die aufgenommene Quantität der Abgabeleistung in Verlustleistung umgesetzt wird. Die aufgenommene Quantität der Abgabeleistung, welche in Verlustleistung umgesetzt wird, leistet somit praktisch keinen Beitrag zur Wirkleistung des Elektromotors, führt jedoch zu einer deutlichen Verkürzung der Dauer des Kaltstarts bzw. der Betriebsphase, in der dieses Verfahren eingesetzt wird.

Vorteilhafte Ausführungen und Ausgestaltungen des erfindungsgemäßen Verfahrens ergeben sich aus den Unteransprüchen.

Bevorzugt wird als Leistungsaufnahmemittel ein Wechselrichter (DC/AC-Wandler) eingesetzt, da der Wechselrichter mehrere Halbbrücken aufweist, welche auf eine Weise ansteuerbar sind, die es ermöglicht, die aufgenommene Quantität der Abgabeleistung des Brennstoffzellensystems in eine oder auch in mehrere Phasenwicklungen des Elektromotors als Verlustleistung umzusetzen.

In einer Ausführungsform der Erfindung wird das Fahrfreigabesignal bei der Warmfahrphase in Abhängigkeit der Abgabeleistung des Brennstoffzellensystems erteilt. Vorteilhaft kann so ein Betriebspunkt zur Erteilung des Fahrfreigabesignals als Konsens der Fahrzeugziele, wie beispielsweise Robustheit, Beschleunigung und Lebensdauer des Brennstoffzellensystems, gefunden werden. Bevorzugt wird die Fahrfreigabe bei einer Verfügbarkeit von weniger als 50 % der Abgabeleistung des Brennstoffzellensystems, insbesondere bei einer Verfügbarkeit von 20 % der Abgabeleistung erteilt. Je nach Dimensionierung des Fahrzeugs kann bei einer Anwendung der besonders bevorzugten Ausführungsform, bei welcher die Fahrfreigabe bei Vorliegen der Abgabeleistung von 20 % erfolgt, die Warmfahrphase bereits weniger als 15 Sekunden nach der Aufwärmphase beginnen.

Bei einer alternativen Ausgestaltung des erfindungsgemäßen Verfahrens wird ein Fahrfreigabesignal bei der Warmfahrphase, in Abhängigkeit der verfügbaren Gesamtabgabeleistung, von einem Brennstoffzellenstapel und einem Energiespeicher erteilt. Die Gesamtabgabeleistung ergibt sich aus der Addition der verfügbaren Leistung des Brennstoffzellenstapels und der verfügbaren Leistung des Energiespeichers, abzüglich der Leistungsaufnahme der elektrischen Nebenverbraucher, welche zum Betrieb des Brennstoffzellensystems und/oder des Brennstoffzellenstapels erforderlich sind. Vorteilhaft wird somit nicht nur die Leistungsfähigkeit des Brennstoffzellenstapels, sondern auch die Leistungsfähigkeit des Energiespeichers bei einem Kaltstart berücksichtigt. Dieser kann je nach Wahl des Energiespeichers bei tiefen Temperaturen sehr eingeschränkt sein. Vorteilhaft wird das Fahrfreigabesignal bei der Warmfahrphase bei einer Verfügbarkeit von weniger als 50 % der Gesamtabgabeleistung, besonders bevorzugt bei Verfügbarkeit von 20 % der Gesamtabgabeleistung erteilt.

In einer Weiterbildung der Erfindung ist vorgesehen, dass die Temperatur im Kühlkreislauf des Brennstoffzellenstapels angehoben wird und/oder die Eingangsfeuchte des Zuführgases, bevorzugt kathodenseitig, für den Brennstoffzellenstapel reduziert wird, um den Brennstoffzellenstapel, insbesondere nach Ablauf des Kaltstarts, für einen nachfolgenden Start zu trocknen.

Bevorzugt werden/wird in Ausgestaltung des erfindungsgemäßen Verfahrens der Brennstoffzellenstapel und/oder der Energiespeicher während der Aufwärmphase und/oder während der Warmfahrphase mit wenigstens einem bezüglich seiner Leistungsaufnahme variablen elektrischen Verbraucher periodisch belastet, so dass der Brennstoffzellenstapel und/oder der Energiespeicher in einem ersten Zeitintervall eine größere Leistung abgeben/abgibt als in einem zweiten Zeitintervall. Dies kann je nach Brennstoffzellentyp und/oder Energiespeichertyp zu einer früheren Betriebsbereitschaft des Brennstoffzellenstapels und/oder des Energiespeichers führen.

Weiterhin bevorzugt wird als Brennstoffzellentyp, aufgrund der im Vergleich zu anderen Brennstoffzellentypen niedrigen Betriebstemperatur, Polymer-Elektrolyt-Membran-Brennstoffzellen eingesetzt. Der Energiespeicher ist beispielsweise als Lithium-Ionen-Batterie oder Nickel-Metall-Hydrid-Batterie ausgebildet. Die Lithium-Ionen-Batterie hat, gegenüber anderen elektrochemischen Energiespeichern, den Vorteil eines relativ hohen Energieinhaltes. Dem Stand der Technik nach hat die Nickel-Metall-Hydrid-Batterie im Vergleich zur Lithium-Ionen-Batterie den Vorteil der niedrigeren Kosten.

Besonders bevorzugt ist vorgesehen, die Leistungsabgabe des Brennstoffzellenstapels und/oder der Batterie während der Aufwärmphase und/oder der Warmfahrphase so einzuregeln, dass der Brennstoffzellenstapel und/oder der Energiespeicher in dem zweiten Zeitintervall eine Leistung von 0 kW abgeben. Die Temperaturschwankungen, welche aus dem alternierenden Betrieb zwischen stromlosen Zustand und Stromabgabe resultieren, können zu einer noch früheren Betriebsbereitschaft des Brennstoffzellenstapels und/oder des Energiespeichers führen.

In einer alternativen Ausgestaltung werden sowohl der Brennstoffzellenstapel als auch der Energiespeicher, mit wenigstens einem bezüglich seiner Leistungsaufnahme variablen elektrischen Verbraucher, periodisch belastet, so dass der Brennstoffzellenstapel in einem ersten Zeitintervall eine größere Leistung abgibt, als in einem zweiten Zeitintervall, und der Energiespeicher in dem ersten Zeitintervall eine niedrigere Leistung abgibt, als in dem zweiten Zeitintervall. Vorteilhaft gibt der Brennstoffzellenstapel in dem zweiten Zeitintervall eine Leistung von 0 kW und der Energiespeicher in dem ersten Zeitintervall eine Leistung von 0 kW ab. Somit kann durch zeitlich wechselweises Verschieben der Leistungsanteile, sowohl für den Brennstoffzellenstapel, als auch für den Energiespeicher ein schnelleres Aufwärmverhalten erreicht werden, was wiederum die Robustheit des Gesamtsystems und die Fahrzeugverfügbarkeit erhöht.

Die auf ein Brennstoffzellensystem gemäß Patentanspruch 10 gerichtete Aufgabe wird durch den kennzeichnenden Teil des Patenanspruchs 10 gelöst. Vorteilhafte Weiterbildungen ergeben sich aus den abhängigen Patentansprüchen.

Das erfindungsgemäße Brennstoffzellensystem ist mit einem Zwischenkreis elektrisch leitend verbindbar, wobei dieser über den Wechselrichter mit dem Elektromotor elektrisch leitend verbindbar ist.

Bevorzugt ist der Elektromotor als Traktionsmotor ausgebildet. Der Traktionsmotor kann in Abhängigkeit seiner Nennleistung einen größeren Teil der Abgabeleistung des Brennstoffzellenstapels im Vergleich zu einem Hilfsantrieb in Verlustleistung umsetzen. Alternativ ist der Elektromotor als Hilfsantrieb wie beispielsweise Luftkompressor, Anodenrezirkulationsgebläse oder Wasserpumpe ausgebildet.

Zur weiteren Ausgestaltung der Erfindung ist der Zwischenkreis über wenigstens einen weiteren Wechselrichter mit wenigstens einem weiteren Elektromotor elektrisch leitend verbindbar. Vorzugsweise wird für jeden weiteren Elektromotor jeweils ein weiterer Wechselrichter bereitgestellt und jedem weiteren Elektromotor ist ein weiterer Wechselrichter zugeordnet. Darüber hinaus kann der Zwischenkreis mit anderen zusätzlichen elektrischen Maschinen, elektrisch leitend verbindbar sein. Eine Steuervorrichtung ist dazu vorgesehen, den wenigstens einen weiteren Wechselrichter zum Aufnehmen einer weiteren Quantität der Abgabeleistung des Brennstoffzellensystems und zum Umsetzen der aufgenommenen weiteren Quantität der Abgabeleistung in Verlustleistung durch Einprägen eines geeigneten Stroms in wenigstens eine zu bestromende Wicklung des wenigstens einen weiteren Elektromotors anzusteuern. Vorzugsweise ist in dieser Ausgestaltung der Elektromotor als Traktionsmotor und der wenigstens eine weitere Elektromotor als Hilfsantrieb des Brennstoffzellensystems ausgestaltet. Wie vorher erläutert, ist ein Traktionsmotor üblicherweise in der Lage einen größeren Teil der Abgabeleistung des Brennstoffzellenstapels im Vergleich zu einem Hilfsantrieb in Verlustleistung umsetzen. Jedoch übersteigt in einem Brennstoffzellenfahrzeug üblicherweise die Anzahl der Hilfsantriebe die Anzahl an verbauten Traktionsmotoren. Daher ist es ebenfalls vorteilhaft, wenn zusätzlich in den Hilfsantrieben Abgabeleistung in Verlustleistung umgesetzt werden kann.

In einer Weiterbildung der Erfindung, ist der Energiespeicher über einen ersten DC/DC-Wandler mit dem Zwischenkreis elektrisch leitend verbindbar, so dass die Spannung des Zwischenkreises weitgehend unabhängig von dem Spannungsniveau des Energiespeichers geregelt werden kann.

Bevorzugt ist der erste DC/DC-Wandler bidirektional betreibbar, was einen Stromfluss, sowohl von dem Energiespeicher in den Zwischenkreis, als auch von dem Zwischenkreis in den Energiespeicher ermöglicht. Somit sind beispielsweise auch Rekuperationsvorgänge zur Wiedergewinnung kinetischer Bremsenergie oder ein Aufladen des Energiespeichers durch den Brennstoffzellenstapel gegeben.

Besonders bevorzugt ist der erste (bidirektional betreibbare) DC/DC-Wandler als Tiefsetz-Hochsetz-Stellerkombination ausgebildet. Vorteilhaft ist der erste DC/DC-Wandler während einer Aufwärmphase und/oder einer Warmfahrphase in der Lage, eine möglichst niedrige Zwischenkreisspannung, insbesondere unterhalb von 200 Volt, einzuregeln. Da der Brennstoffzellenstapel direkt an den Zwischenkreis elektrisch gekoppelt ist, führt die Einstellung einer niedrigen Zwischenkreisspannung zu einer niedrigen Brennstoffzellenstapelspannung, was in einem schlechten Wirkungsgrad resultiert und eine hohe direkte Wärmeumwandlung in dem Brennstoffzellenstapel zur Folge hat. Der Wärmeeintrag wird größer, je tiefer die Zwischenkreisspannung ist.

In einer alternativen Ausgestaltung ist der erste DC/DC-Wandler zwischen Batterie und Zwischenkreis angeordnet. Darüber hinaus ist ein zweiter DC/DC-Wandler, welcher insbesondere als Hochsetzsteller oder als eine Kombination aus Tief- und Hochsetzsteller ausgebildet ist, zwischen dem Zwischenkreis und dem Brennstoffzellenstapel angeordnet. Der zweite DC/DC-Wandler ist dazu vorgesehen, während einer Aufwärmphase und/oder einer Warmfahrphase eine möglichst niedrige Brennstoffzellenstapelspannung, vorzugsweise unterhalb von 75 Volt, einzuregeln. Mit der alternativen Ausgestaltung kann im Gegensatz zu der besonders bevorzugten Variante mit nur einem (ersten) DC/DC-Wandler, bei der alternativen Ausgestaltung (mit dem zweiten DC/DC-Wandler) eine weitaus tiefere Brennstoffzellenstapelspannung eingestellt werden, was in der Aufwärmphase und/oder während der Warmfahrphase wünschenswert ist. Die besonders bevorzugte Variante weist jedoch den Vorteil der niedrigeren Kosten auf, da hier der zweite DC/DC-Wandler eingespart wird.

Weitere vorteilhafte Ausführungen und Ausgestaltungen der Erfindung werden anhand der Figuren in dem nachfolgenden Ausführungsbeispiel exemplarisch erläutert.

Dabei zeigen:
- Fig. 1: Ein Ablaufdiagramm eines erfindungsgemäßen Verfahrens zum Kaltstarten eines Brennstoffzellensystems,
- Fig. 2: Eine Drehmoment-Drehzahlkennlinie eines Traktionsmotors, und
- Fig. 3: Ein Blockschaltbild eines Antriebsstrangs mit einem erfindungsgemäßen Brennstoffzellensystem.

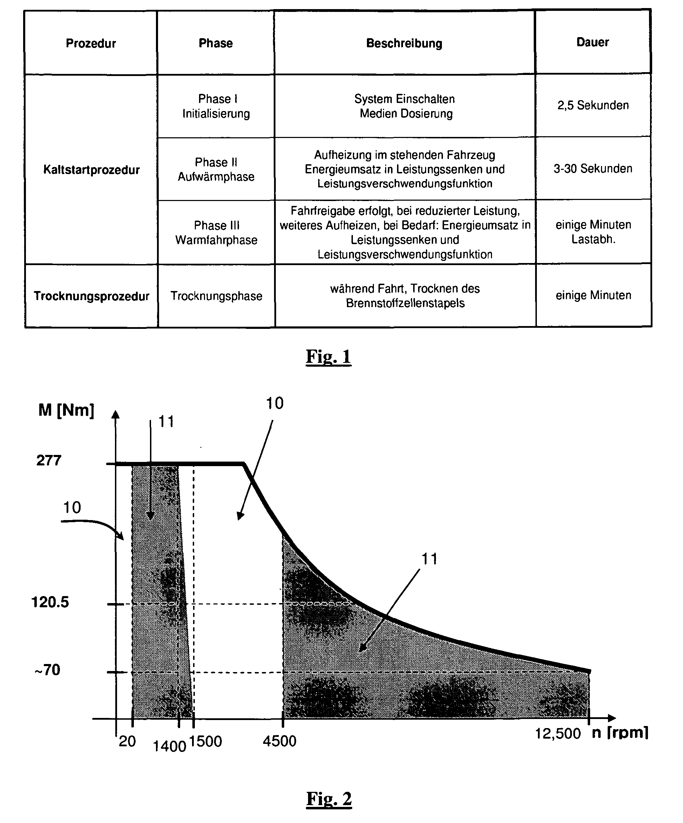

In Figur 1 ist ein Ablaufdiagramm angegeben, welches ein Ausführungsbeispiel eines erfindungsgemäßen Verfahrens zum Kaltstarten eines Brennstoffzellensystems für ein Brennstoffzellenfahrzeug zeigt. Dabei ist in einer ersten Spalte die jeweilige Prozedur, welche aufgerufen werden kann, angegeben. In einer zweiten Spalte ist die zu der jeweiligen Prozedur gehörige Betriebsphase, und in der dritten Spalte eine Beschreibung dargestellt. Die bevorzugte Dauer der jeweiligen Betriebsphase wird in der vierten Spalte angezeigt.

Ein Kaltstart bezeichnet hier den Start eines kalten nicht betriebswarmen Brennstoffzellenfahrzeugs, bei welchem die Temperatur eines Brennstoffzellenstapels 1 unterhalb der Betriebstemperatur insbesondere unterhalb von 0°C und beispielsweise bei - 25° liegen soll.

Zur Sicherstellung eines ausreichend zuverlässigen, stabilen und reproduzierbaren Kaltstarts kann eine Kaltstartprozedur vorgesehen sein, welche zumindest drei sequentiell nacheinander ablaufende Betriebsphasen vorsieht.

In einer ersten Betriebsphase - im Folgenden vereinfacht als Initialisierungsphase bezeichnet - erfolgt das Einschalten des Brennstoffzellensystems und die Dosierung der Medien (Wasserstoff/Sauerstoff).

Der Initialisierungsphase nacheilend, das heißt nach der Initialisierungsphase erfolgt der Kaltstartvorgang, dem die zwei übrigen Betriebsphasen (eine zweite und eine dritte Betriebsphase) der Kaltstartprozedur zuzuordnen sind.

In der zweiten Betriebsphase - im Folgenden vereinfacht Aufwärmphase bezeichnet - soll der Brennstoffzellenstapel 1 bei einer möglichst niedrigen Spannung betrieben werden, was einen relativ niedrigen Wirkungsgrad bedingt und eine hohe direkte Wärmeumwandlung in dem Brennstoffzellenstapel 1 zur Folge hat, wodurch die Aufwärmphase entscheidend verkürzt wird. Die entstehende elektrische Leistung wird dem Brennstoffzellenstapel 1 entnommen und elektrischen Verbrauchern 3, 4, 7, 8 zugeführt, welche während des zweiten Betriebszustands als Leistungssenken fungieren.

In diesem Ausführungsbeispiel werden die folgenden Leistungssenken mit folgenden Einschränkungen betrachtet:
- 1.: Eine HV-Batterie 4: Die HV-Batterie 4 kann bei tiefen Temperaturen nur wenig Leistung aufnehmen und steht daher nach kurzer Zeit als Leistungssenke nicht mehr zur Verfügung.
- 2.: Mehrere Hilfsantriebe 8 des Brennstoffzellensystems (zum Beispiel: Antriebsmotoren für Luftkompressor und Rezirkulationsgebläse): Die Verfügbarkeit der Hilfsantriebe 8 des Brennstoffzellensystems als Leistungssenken ist nicht uneingeschränkt, sondern richtet sich nach den aktuellen Erfordernissen des Fahrzeug-Betriebszustandes.
- 3.: Ein HV-Zusatzheizer: Der HV-Zusatzheizer ist auch nicht in der Lage beliebig viel Leistung aufnehmen und steht auch nicht uneingeschränkt zur Verfügung.
- 4.: Ein 12-Volt Bordnetz mit elektrischen Verbrauchern, wie beispielsweise einem elektrischer Kabinenluftheizer: Die Leistungsaufnahme des Bordnetzes erfolgt in Abhängigkeit der Leistungsanforderung der dem Bordnetz zugeordneten Verbraucher bzw. einem Ladezustand einer dem Bordnetz zugeordneten Niedervolt-Batterie. Einer der elektrischen Verbraucher des Bordnetzes ist beispielsweise ein elektrischer Kabinenluftheizer, der die Enteisung der Windschutzscheibe sicherstellt. Auch der elektrische Kabinenluftheizer kann als Leistungssenke verwendet werden. Dieser wird jedoch verständlicherweise vom Fahrer zu gegebener Zeit abgeschaltet.

Somit ist die Anzahl der Leistungssenken für den Brennstoffzellenstapel begrenzt und die elektrischen Verbraucher 3, 4, 7, 8 stehen aufgrund der dargestellten Betriebsgrenzen auch nicht uneingeschränkt als Leistungssenken zur Verfügung. Daher wird wenigstens ein Elektromotor 6, 8 so geregelt, dass er zusätzlich Leistung in Verlustleistung umsetzen kann. Die Regelung des Elektromotors 6, 8 kann dabei auf dem bereits bekannten Prinzip der Feldorientierung basieren, welches im Nachfolgenden kurz erläutert wird.

Bei diesem bekannten Prinzip ist es erforderlich, wenigstens zwei Phasenströme, zu messen. Der dritte Phasenstrom ist bei einer Sternschaltung aus den beiden gemessenen Phasenströmen bestimmbar. Diese drei Phasenströme bilden einen Stromraumzeiger, der in ein beispielsweise mit einer Rotorflußlage rotierendes kartesisches Koordinatensystem (rotorfestes Bezugssystem), transformiert wird. Dazu muss notwendigerweise die aktuelle Rotorflußlage ermittelt werden und zweckmäßigerweise diese als Winkel für die eben genannte Transformation bereitgestellt werden. Damit erhält man zwei stationär konstante Größen, nämlich eine Größe in Flußrichtung und eine Größe orthogonal zu der Flußrichtung. Diese beiden Größen sind jeweils mittels eines geeigneten Reglers, beispielsweise mittels eines PI-Reglers, regelbar. Dabei können als Sollwerte eine flußbildende Größe und eine momentbildende Größe vorgegeben werden. Die flußbildende Größe ist ein flußbildender Strom und die momentbildende Größe ein momentbildender Strom. Die Ausgangsgrößen der Regler sind die Größen des Spannungsraumzeigers. Dieser kann durch eine Rücktransformation mithilfe des Rotorflusslagewinkels in ein statorfestes System transformiert werden, um einen Wechselrichter anzusteuern.

Bei diesem bekannten Prinzip ist also eine Entkopplung der flußbildenden von der momentbildenden Größe gegeben. Somit ist ein flußbildender Strom unabhängig von einem momentbildenden Strom regelbar. Bei dem bekannten Prinzip wird üblicherweise eine Regelstrategie gewählt, bei welcher der flußbildende Strom zur Effizienzsteigerung möglichst minimiert wird.

Erfindungsgemäß soll jedoch der flußbildende Strom bei der Aufwärmphase und auch bei Bedarf bei einer Warmfahrphase, welche später noch erläutert wird, maximiert werden, um eine möglichst hohe Quantität einer Abgabeleistung des Brennstoffzellensystems aufnehmen zu können. Die aufgenommene Quantität der Abgabeleistung des Brennstoffzellensystems, wird dem Elektromotor zugeführt, um diese nicht in Drehmoment, sondern in Verlustleistung umzusetzen. Daher wird die eben genannte Funktion im Folgenden als Verlustleistungsfunktion bezeichnet. Durch diese Funktion wird eine höhere Belastung des Brennstoffzellstapels 1 ermöglicht, wodurch eine schnellere Betriebsbereitschaft erreicht werden kann. Die Verlustleistungsfunktion wird bevorzugt bei dem elektrischen Traktionsmotor 6 angewendet, beschränkt sich jedoch nicht auf diesen und kann ebenso auf andere im Fahrzeug vorhandene Elektromotoren 6, 8 wie beispielsweise die Hilfsantriebe 8 des Brennstoffzellensystems, appliziert werden. Dazu ist es erforderlich, den Wechselrichter des jeweiligen Hilfsantriebs 8, anzusteuern.

Zur Illustration der vorher erläuterten Verlustleistungsfunktion, ist in Figur 2 eine Drehmoment-Drehzahl-Kennlinie des Traktionsmotors 6, welcher vorzugsweise als Permanenterregte-Synchronmaschine ausgebildet ist, dargestellt. Die Ordinatenachse (y) visualisiert das Drehmoment und die Abszissenachse (x) den Drehzahlbereich der Traktionsmaschine. Demnach kann der elektrische Traktionsmotor 6 in bestimmten Situationen Strom, welcher faktisch nicht zur Generation von Drehmoment beiträgt, in seine Wicklungen durch eine gezielte Ansteuerung des Wechselrichters, einprägen.

Dazu kann beispielsweise eine Prozedur vorgesehen sein, welche bei Bedarf ermittelt, ob eine Quantität der Abgabeleistung des Brennstoffzellensystems durch ein Leistungsaufnahmemittel (Wechselrichter) aufnehmbar ist. Ist dies der Fall, so wird ermittelt welche Quantität der Abgabeleistung des Brennstoffzellensystems in dem aktuellen Betriebszustand durch das Leistungsaufnahmemittel aufnehmbar ist und in Verlustleistung im Elektromotor umsetzbar ist. Entsprechend des ermittelten Werts wird der Sollwert für den flußbildenden Strom angehoben und der Wechselrichter angesteuert, um die Quantität der Abgabeleistung aufzunehmen und in zumindest einer Phasenwicklung des Elektromotors 6, 8 in Verlustleistung umzusetzen. Es wird also ein höherer flußbildender Strom, als für die momentane Lastanforderung, erforderlich ist, eingeregelt.

Somit kann durch gezieltes Ansteuern des Wechselrichters zumindest ein Teil der Abgabeleistung des Brennstoffzellensystems aufgenommen werden und der aufgenommene Teil der Abgabeleistung in Verlustleistung, umgesetzt werden. Durch diese Leistungsaufnahme wird kein zusätzliches Drehmoment generiert.

Die Verfügbarkeit der Verlustleistungsfunktion ist zumindest von der Drehzahl bzw. dem Drehmoment des Traktionsmotors 6 abhängig. Die Verlustleistungsfunktion kann für bestimmte Drehmoment-Drehzahl-Kombination im ersten Quadranten (motorischer Betrieb bei positivem Drehmoment und positiver Drehzahl) der Drehmoment-Drehzahl-Kennlinie aktiviert 10 werden. In den aktiven Bereichen 10 kann der flußbildende Strom entsprechend angehoben werden. Es soll während der Aufwärmphase und/oder während der Warmfahrphase in den aktiven Bereichen 10 ein höherer flußbildender Strom eingeprägt werden, als für die aktuelle Lastanforderung erforderlich ist. In anderen Bereichen 11 wird die Verlustleistungsfunktion nicht aktiviert. Das Maß der Leistungsaufnahme ist zumindest temperaturabhängig.

Weiterhin bezugnehmend auf Figur 1 besteht bei zunehmender Dauer der Aufwärmphase, bei welcher die Leistungsfähigkeit des Brennstoffzellenstapels 1 ansteigt, die Möglichkeit, dass die elektrischen Verbraucher 3, 4, 6, 7, 8 auch unter Anwendung der Verlustleistungsfunktion weniger elektrische Energie aufnehmen können, als der Brennstoffzellenstapel 1 bereitstellen kann, was eine unnötige Verlängerung der Aufwärmphase bedeuten würde.

Daher soll im dritten Betriebszustand - im folgenden Warmfahrphase genannt - die Fahrfreigabe vorzeitig bei einer reduziert verfügbaren Abgabeleistung des Brennstoffzellensystems erteilt werden. Die Abgabeleistung des Brennstoffzellensystems wird als die elektrische Leistung des Brennstoffzellenstapels 1 abzüglich der Leistungsaufnahme der elektrischen Nebenverbraucher 7, 8, welche zum Betrieb des Brennstoffzellensystems und/oder des Brennstoffzellenfahrzeugs erforderlich sind, definiert. Elektrische Nebenverbraucher 7, 8 sind beispielsweise Hilfsantriebe 8 des Brennstoffzellensystems, HV-Zusatzheizer, gegebenenfalls ein Niedervolt-DC/DC-Wandler 7 samt Niedervolt-Bordnetz und Niedervolt-Verbraucher wie beispielsweise Kabinenluftheizer oder Fahrzeugbeleuchtung. Alternativ kann vorgesehen sein, die Fahrfreigabe vorzeitig bei einer reduziert verfügbaren Gesamtabgabeleistung von Brennstoffzellenstapel 1 und Energiespeicher 4, zu erteilen.

Explizit soll die Fahrfreigabe erfolgen, bevor die Hälfte der Abgabeleistung des Brennstoffzellenstapels 1 verfügbar ist. Dies führt dazu, dass die Abgabeleistung des Brennstoffzellenstapels 1 frühzeitig effizient nutzbar ist, da diese ab dem Zeitpunkt der Fahrfreigabe dem Traktionsmotor 6 als elektrische Antriebsleistung zuführbar ist. Bei Verfügbarkeit von ca. 20% der Abgabeleistung ist es besonders effizient die Fahrfreigabe zu erteilen.

Vorteilhaft ist der Traktionsmotor 6 im Vergleich zu anderen elektrischen Verbrauchern 3, 4, 7, 8 im elektrischen Antriebsstrang bei entsprechender Anforderung in der Lage, am meisten Leistung, in Form von Antriebsleistung aufzunehmen. Dies führt zu einer zusätzlichen in diesem Betriebszustand gerade zu gewünschten und effektiven Erwärmung des Brennstoffzellenstapels 1, da die vorher beschriebene ungenügende Aufnahmefähigkeit der Leistungssenken auf einfache Weise behoben werden kann. Vielmehr ist die Abgabeleistung des Brennstoffzellenstapels 1 effizient für den Vortrieb nutzbar, da diese letztendlich in Drehmoment umsetzbar ist.

Der dritte Betriebszustand ist vorwiegend von einer aktuellen Leistungsanforderung des Traktionsmotors 6 abhängig. Die Leistungsanforderung wiederum ist beispielsweise zumindest in Abhängigkeit der Fahrpedalstellung bestimmbar. Die unterschiedlichen Leistungsanforderungen können exemplarisch absteigend in vier verschiedene Klassifikationen eingeordnet werden: Hochlastbetrieb, Normalbetrieb, Niederlastbetrieb und Leerlaufbetrieb.

Je nach Leistungsanforderung des Traktionsmotors 6 werden im dritten Betriebszustand zwei Betriebsarten (eine erste und eine zweite Betriebsart) unterschieden.

In der ersten Betriebsart, bei dem Hochlastbetrieb oder dem Normalbetrieb, soll die zur Verfügung stehende Abgabeleistung möglichst vollständig von dem elektrischen Traktionsmotor 6 angefordert und in Drehmoment umgesetzt werden.

Ist die Abgabeleistung noch zu gering, um die gewünschte Antriebsleistung zur Verfügung zu stellen, kann vorgesehen sein, bei entsprechender Betriebsbereitschaft und entsprechendem Ladezustand der Hochvolt-Batterie 4, zusätzlich elektrische Energie aus der Hochvolt-Batterie 4 zu entnehmen, um den elektrischen Traktionsmotor 6 zu speisen.

Alternativ kann auch die Leistungsanforderung beispielsweise mittels eines dafür geeigneten Iterationsverfahrens entsprechend reduziert werden. Das in dieser Betriebsart zur Verfügung stehende Drehmoment reicht zumindest aus, um einen adäquaten Fahrbetrieb sicherzustellen.

Die zweite Betriebsart wird angewendet, wenn die Leistungsanforderung des Traktionsmotors 6 während eines Niederlastbetriebs oder Leerlaufbetriebs einen bestimmten Wert unterschreitet, was bedeutet, dass eine höhere Abgabeleistung des Brennstoffzellensystems verfügbar ist, als Antriebsleistung von dem Traktionsmotor 6 aufnehmbar ist.

Die Differenz zwischen verfügbarer Abgabeleistung und Leistungsanforderung des Traktionsmotors 6, wird im Folgenden als verfügbare Überschussleistung definiert. Die verfügbare Überschlussleistung soll in der zweiten Betriebsart den vorher genannten Leistungssenken 3, 4, 7, 8, je nach Verfügbarkeit, zugeführt werden. Zusätzlich sollen die Elektromotoren 6, 8 wie der Traktionsmotor 6 und die Hilfsantriebe 8 die vorher beschriebene Verlustleistungsfunktion nutzen. Die Elektromotoren 6, 8 können durch Einprägen eines geeigneten Magnetisierungsstroms, in wenigstens eine ihrer Wicklungen, zumindest einen Teil der Überschussleistung in Verlustleistung umsetzen.

In einer Weiterbildung der Erfindung ist bei der so genannten Trocknungsprozedur vorgesehen, dass eine Temperatur im Kühlkreislauf des Brennstoffzellenstapels 1 angehoben und/oder die Eingangsfeuchte des Zuführgases am Brennstoffzellenstapel 1 reduziert wird, um den Brennstoffzellenstapel 1, insbesondere nach Ablauf der Kaltstartprozedur für einen nachfolgenden Start zu trocken.

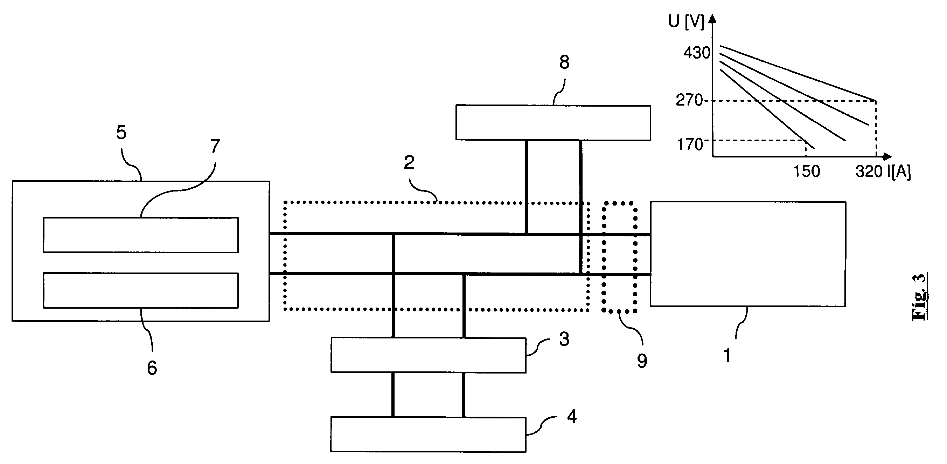

Das erfindungsgemäße Verfahren, mit seinen Ausgestaltungen und Weiterbildung wurde bereits anhand der Figuren 1 und 2 erläutert. Dieses Verfahren wird bevorzugt in einem Kraftfahrzeug mit einem Antriebsstrang, welcher in Figur 3 dargestellt ist, angewendet. Dazu ist es erforderlich, entsprechende Steueralgorithmen in wenigstens einem Steuergerät zu implementieren, oder bereits vorhandene Steueralgorithmen zu ergänzen.

Das Ausführungsbeispiel gemäß Figur 3 zeigt in der Mitte einen Antriebsstrang mit einem erfindungsgemäßen Brennstoffzellensystem eines Kraftfahrzeugs. Auf der rechten Seite der Figur 3 ist oben beispielhaft eine temperaturabhängige U-I-Kennlinienschar eines Brennstoffzellenstapels 1 dargestellt.

Das erfindungsgemäße Brennstoffzellensystem umfasst den Brennstoffzellenstapel 1, welcher Gleichstrom für einen elektrischen Zwischenkreis 2 bereitstellt. Ferner ist eine Batterie 4 mit dem Zwischenkreis 2 über einen ersten bidirektionalen DC/DC-Wandler 3 elektrisch leitend verbindbar. Der erste DC/DC-Wandler 3 ist als Hoch/Tiefsetzsteller ausgebildet. Weiterhin ist an den Zwischenkreis 2 eine Antriebsmotoreinheit 5 angeschlossen. Die Antriebsmotoreinheit 5 weist einen nicht dargestellten Wechselrichter, einen elektrisch Traktionsmotor 6 und einen Niedervolt-DC/DC-Wandler 7 auf. Der Zwischenkreis 2 ist über den Wechselrichter mit dem elektrischen Traktionsmotor 6 elektrisch leitend verbindbar. Dieser DC/DC-Wandler 7 ist an den Zwischenkreis 2 angeschlossen und als Niedervolt-DC/DC-Wandler 7 zur Stützung der Versorgungsspannung eines Bordnetzes mit einer Nennspannung von vorzugsweise 14 Volt und einer Batteriespannung von 12 Volt ausgestaltet.

Der am Zwischenkreis 2 betriebene Wechselrichter ist als 3-phasiger Wechselrichter ausgebildet und weist drei Halbbrücken auf, welche bipolar über eine positive und eine negative Versorgungsschiene mit dem Zwischenkreis 2 elektrisch leitend verbindbar sind. Jede Halbbrücke weist zwei in Reihe schaltbare Schaltelemente auf, welche vorzugsweise als Leistungshalbleiter, wie beispielsweise IGBTs oder MOSFETs, ausgebildet sind. Parallel zu jedem Schaltelement, aber entgegensetzt zur jeweiligen Stromflussrichtung, kann eine Freilaufdiode angeordnet sein. Ferner weist jede Halbbrücke zwischen beiden Schaltelementen einen Zwischenknoten auf, wobei jeder Zwischenknoten jeweils mit einer Phasenwicklung des Elektromotors 6 elektrisch leitend verbindbar ist. Die drei Phasenwicklungen sind vorzugsweise in Stern geschaltet. Die Spannung des Zwischenkreises 2 ist zum Beispiel mithilfe der Pulsweitenmodulation an die drei Phasenwicklungen schaltbar.

Ferner kann der Zwischenkreis 2 beispielsweise über ein bipolares Leitungsnetz mit verschiedenen Hilfsantrieben 8 zumindest zeitweise elektrisch leitend verbunden werden. Der Zwischenkreis 2 ist dabei über jeweils einen weiteren Wandler (Wechselrichter) jeweils mit einem weiteren Elektromotor für jeden Hilfsantrieb 8 elektrisch leitend verbindbar.

Um einen Teil der Abgabeleistung während der Aufwärmphase und/oder während der Warmfahrphase in Verlustleistung umzusetzen, können die Schaltelemente des Wechselrichters entsprechend angesteuert werden. Dabei kann vorgesehen sein, einen geeigneten Strom in eine, oder auch in mehrere Phasenwicklungen zumindest zeitweise einzuprägen. Es können auch weitere Bauelemente in den Wechselrichter und/oder den Elektromotor 6, 8 integriert werden, welche in der Lage sind, einen Teil der Abgabeleistung des Brennstoffzellensystems aufzunehmen und in Verlustleistung umzusetzen.

Bevorzugt wird das Spannungsniveau des Zwischenkreises 2 von dem Brennstoffzellensystem vorgegeben und ist über den ersten DC/DC-Wandler 3 regelbar. Über den ersten DC/DC-Wandler 3 ist das zwischenkreisseitige Spannungsniveau auf ein im Verhältnis zum batterieseitigen Spannungsniveau äquivalentes, bevorzugt auch auf ein abweichendes, insbesondere ein höheres oder niedrigeres Spannungsniveau anpassbar. Um abweichende Spannungsniveaus bereitzustellen verfügt dieser erste DC/DC-Wandler 3 über eine Buck-Funktion (Spannungsherabsetzung) und eine Boost-Funktion (Spannungserhöhung). Zur Erläuterung der Buck- und Boost-Funktion soll das zwischenkreisseitige Spannungsniveau im Bezug auf den ersten DC/DC-Wandler 3 als Eingangsspannung und das batterieseitige Spannungsniveau als Ausgangsspannung definiert werden. Wird die Eingangsspannung des DC/DC-Wandlers 3 in eine niedrigere Ausgangsspannung gewandelt, arbeitet der erste DC/DC-Wandler 3 als Tiefsetzsteller in der sogenannten Buck-Funktion. Soll die Eingangsspannung auf eine höhere Ausgangsspannung gesetzt werden, so wird der erste DC/DC-Wandler 3 mithilfe der Boost-Funkiton als Hochsetzsteller betrieben. Die Regelung der Zwischenkreisspannung über den ersten DC/DC-Wandler 3 ist von Vorteil, da dieser bidirektional betreibbar ist, und somit dem Zwischenkreis 2 sowohl Strom zuführbar, als auch entnehmbar ist. Aus diesem Grund soll der erste DC/DC-Wandler 3 in einem Vier-Quadrantentbetrieb betreibbar sein und außerdem über die vorher erläuterte Buck- und Boost-Funktionalität verfügen.

Mit einem derartigen DC/DC-Wandler 3 können das zwischenkreisseitige Spannungsniveau und das batterieseitigen Spannungsniveau entkoppelt werden, was insbesondere bei der Aufwärmphase von besonderer Bedeutung ist. Während der Aufwärmphase und/oder während der Warmfahrphase ist es vorteilhaft, eine möglichst niedrige Zwischenkreisspannung einzuregeln. Damit kann der Brennstoffzellenstapel 1 mit einer möglichst niedrigen Spannung und einem möglichst schlechten Wirkungsgrad betrieben werden, was zu einer hohen Abwärme des Brennstoffzellenstapels 1 führt. Für die Zwischenkreisspannung kann es auch vorgesehen sein, eine definierte Mindestspannung einzustellen, welche während des Kaltstartvorgangs keinesfalls unterschritten werden darf. Beispielsweise ist bei tiefen Temperaturen unterhalb des Gefrierpunkts eine Mindestspannung von 180 Volt erforderlich, um eine ausreichende Pumpenleistung für die Kühlwasserpumpe (unter Berücksichtigung der Viskosität des Kühlwassers bei kalten Temperaturen) zu gewährleisten. Das Spannungsniveau des Zwischenkreises 2 und des Brennstoffzellenstapels 1 sind in dem Ausführungsbeispiel gleich, da der Brennstoffzellenstapel 1 direkt an dem Zwischenkreis 2 angeschlossen ist.

In einer optionalen Ausgestaltung ist ein zweiter DC/DC-Wandler 9 vorgesehen, welcher dem Brennstoffzellenstapel 1 vorgeschaltet ist. Der zweite DC/DC-Wandler 9 ist in Figur 1 mit gepunkteten Linien versehen. Mit dem (zweiten) zwischen Brennstoffzellenstapel 1 und Zwischenkreis 2 angeordneten DC/DC-Wandler 9 kann die Spannung des Brennstoffzellenstapels 1 unter die Spannung des Zwischenkreises 2 geregelt werden, was vor allem bei der Aufwärmphase und/oder der Warmfahrphase von besonderem Vorteil ist. Somit kann der Brennstoffzellenstapel 1 während der Aufwärmphase bei einer im Vergleich zum ersten Ausführungsbeispiel noch niedrigeren Brennstoffzellenstapelspannung, bevorzugt unterhalb von 75 Volt, betrieben werden und es kann trotzdem noch eine hohe für die Speisung der elektrischen Verbraucher angemessene Zwischenkreisspannung von beispielsweise 400 Volt bereitgestellt werden. Bei der optionalen Variante ist somit die Möglichkeit gegeben, die Spannung des Brennstoffzellenstapels 1 bei einer Aufwärmphase weitaus tiefer einzustellen, was einen schnelleren Aufwärmvorgang, im Vergleich zum ersten Ausführungsbeispiel ermöglichen kann.

### Bezugszeichenliste

- 1: Brennstoffzellenstapel
- 2: Zwischenkreis
- 3: Erster DC/DC-Wandler
- 4: Energiespeicher
- 5: Antriebsmotoreinheit
- 6: Elektrischer Traktionsmotor
- 7: Niedervolt-DC/DC-Wandler
- 8: Hilfsantriebe
- 9: Zweiter DC/DC-Wandler
- 10: Verlustleistungsfunktion aktivierbar
- 11: Verlustleistungsfunktion nicht aktiv

## Patentansprüche

1. Verfahren zum Kaltstarten eines Brennstoffzellensystems eines Kraftfahrzeugs, umfassend zumindest folgende Betriebsphasen:
1) Aufwärmphase: Belasten eines Brennstoffzellenstapels (1) mit wenigstens einem Verbraucher und
2) Warmfahrphase: Erteilen eines Fahrfreigabesignals in Abhängigkeit zumindest einer Einflussgröße,
mit den folgenden Verfahrensschritten:
- Aufnehmen einer bestimmten Quantität einer Abgabeleistung des Brennstoffzellensystems bei der Aufwärmphase und/oder bei der Warmfahrphase durch ein Leistungsaufnahmemittel und
- Umsetzen der aufgenommenen Quantität der Abgabeleistung in Verlustleistung durch Einprägen eines geeigneten Stroms in wenigstens eine zu bestromende Wicklung eines Elektromotors (6,8),
**dadurch gekennzeichnet, dass**
ein erster DC/DC-Wandler (3) zwischen einem Energiespeicher (4) und einem Zwischenkreis (2) angeordnet wird, und zwischen Brennstoffzellenstapel (1) und Zwischenkreis (2) ein zweiter DC/DC-Wandler (9) angeordnet wird und dazu vorgesehen ist, während der Aufwärmphase und/oder der Warmfahrphase eine möglichst niedrige Brennstoffzellenstapelspannung einzuregeln.

2. Verfahren nach Anspruch 1,
**dadurch gekennzeichnet, dass**
das Leistungsaufnahmemittel ein Wechselrichter ist.

3. Verfahren nach Anspruch 1 oder 2,
**dadurch gekennzeichnet, dass**
das Fahrfreigabesignal bei der Warmfahrphase in Abhängigkeit der verfügbaren Abgabeleistung des Brennstoffzellensystems oder in Abhängigkeit der verfügbaren Gesamtabgabeleistung von dem Brennstoffzellenstapel (1) und einem Energiespeicher (4) erteilt wird.

4. Verfahren nach einem der vorhergehenden Ansprüche"
**dadurch gekennzeichnet, dass**
das Fahrfreigabesignal bei der Warmfahrphase bei einer Verfügbarkeit von weniger als 50 % der Abgabeleistung des Brennstoffzellensystems, erteilt wird, oder dass das Fahrfreigabesignal bei der Warmfahrphase bei einer Verfügbarkeit von weniger als 50 % der Gesamtabgabeleistung von dem Brennstoffzellenstapel (1) und einem Energiespeicher (4), erteilt wird.

5. Verfahren nach einem der vorherigen Ansprüche,
**dadurch gekennzeichnet, dass**
nach einem Kaltstart eine Temperatur in einem Kühlkreislauf des Brennstoffzellensystems angehoben wird und/oder eine Eingangsfeuchte eines Zuführgases für den Brennstoffzellenstapel (1) reduziert wird.

6. Verfahren nach einem der vorherigen Ansprüche,
**dadurch gekennzeichnet, dass**
der Brennstoffzellenstapel (1) und/oder ein Energiespeicher (4) während der Aufwärmphase und/oder während der Warmfahrphase mit wenigstens einem, bezüglich seiner Leistungsaufnahme variablen Verbraucher, periodisch belastet werden/wird, so dass der Brennstoffzellenstapel (1) und/oder der Energiespeicher (4) in einem ersten Zeitintervall, eine größere Leistung abgeben/abgibt, als in einem zweiten Zeitintervall.

7. Verfahren nach Anspruch 6,
**dadurch gekennzeichnet, dass**
der Brennstoffzellenstapel (1) und/oder der Energiespeicher (4) in dem zweiten Zeitintervall eine Leistung von 0 kW abgeben/abgibt.

8. Verfahren nach einem der Ansprüche 1 bis 5,
**dadurch gekennzeichnet, dass**
der Brennstoffzellenstapel (1) und ein Energiespeicher (4) mit wenigstens einem, bezüglich seiner Leistungsaufnahme variablen Verbraucher, periodisch belastet werden, so dass der Brennstoffzellenstapel (1) in einem ersten Zeitintervall, eine größere Leistung abgibt, als in einem zweiten Zeitintervall, wobei der Energiespeicher (4) in dem ersten Zeitintervall eine niedrigere Leistung abgibt, als in dem zweiten Zeitintervall.

9. Verfahren nach Anspruch 8,
**dadurch gekennzeichnet, dass**
der Brennstoffzellenstapel (1) in dem zweiten Zeitintervall eine Leistung von 0 kW, und der Energiespeicher (4) in dem ersten Zeitintervall eine Leistung von 0 kW abgibt.

10. Brennstoffzellensystem eines Kraftfahrzeugs, wobei das Brennstoffzellensystem wenigstens einen Brennstoffzellenstapel (1) aufweist, welcher zur Bereitstellung von Gleichstrom für einen Zwischenkreis (2), mit diesem (2) elektrisch leitend verbindbar ist, wobei der Zwischenkreis (2) über einen Wechselrichter mit einem Elektromotor (6) elektrisch leitend verbindbar ist, und wobei der Zwischenkreis (2) mit einem Energiespeicher (4) elektrisch leitend verbindbar ist,
wobei eine Steuerungsvorrichtung dazu vorgesehen ist,
den Wechselrichter zum Aufnehmen einer bestimmten Quantität einer Abgabeleistung des Brennstoffzellensystems und zum Umsetzen der aufgenommenen Quantität der Abgabeleistung in Verlustleistung durch Einprägen eines geeigneten Stroms in wenigstens eine zu bestromende Wicklung des Elektromotors (6) anzusteuern,
**dadurch gekennzeichnet, dass**
ein erster DC/DC-Wandler (3) zwischen Energiespeicher (4) und Zwischenkreis (2) angeordnet ist, und zwischen Brennstoffzellenstapel (1) und Zwischenkreis (2) ein zweiter DC/DC-Wandler (9) angeordnet und dazu vorgesehen ist, während einer Aufwärmphase und/oder einer Warmfahrphase eine möglichst niedrige Brennstoffzellenstapelspannung einzuregeln

11. Brennstoffzellensystem nach Anspruch 10,
**dadurch gekennzeichnet, dass**
der Elektromotor (6) ein Traktionsmotor ist.

12. Brennstoffzellensystem nach Anspruch 10 oder 11,
**dadurch gekennzeichnet, dass**
der Zwischenkreis (2) über wenigstens einen weiteren Wechselrichter mit wenigstens einem weiteren Elektromotor (8) elektrisch leitend verbindbar ist, wobei die Steuervorrichtung und/oder eine weitere Steuervorrichtung dazu vorgesehen sind/ist,
den wenigstens einen weiteren Wechselrichter zum Aufnehmen einer weiteren Quantität der Abgabeleistung des Brennstoffzellensystems und zum Umsetzen der aufgenommenen weiteren Quantität der Abgabeleistung in Verlustleistung durch Einprägen eines geeigneten Stroms in wenigstens eine zu bestromende Wicklung des wenigstens einen weiteren Elektromotors (8) anzusteuern.

## Claims

1. Method for cold starting a fuel cell system of a motor vehicle, comprising at least the following operating phases:
1) warm-up phase: applying at least one load to a fuel cell stack (1) and
2) warm-running phase: emitting a drive release signal in dependence upon at least one influential variable,
with the following method steps:
- receiving a specified quantity of an output power of the fuel cell system in the warm-up phase and / or in the warm-running phase through a power receiving means and
- converting the quantity of output power received into heat loss by providing an appropriate current into at least one winding of an electric motor (6, 8) to be supplied,
**characterised in that**
a first DC/DC converter (3) is arranged between an energy storage (4) and an intermediate circuit (2), and a second DC/DC converter (9) is arranged between the fuel cell stack (1) and the intermediate circuit (2) and is designed to regulate a fuel cell stack voltage that is as low as possible during the warm-up phase and / or the warm-running phase.

2. Method according to claim 1,
**characterised in that**
the power receiving means is an inverter.

3. Method according to claim 1 or 2,
**characterised in that**
the drive release signal is emitted during the warm-running phase in dependence upon the available output power of the fuel cell system or in dependence upon the total available output power of the fuel cell stack (1) and an energy storage (4).

4. Method according to one of the preceding claims,
**characterised in that**
the drive release signal is emitted in the warm-running phase when less than 50% of the output power of the fuel cell system is available, or the drive release signal is emitted in the warm-running phase when less than 50% of the total output power of the fuel cell stack (1) and an energy storage (4) is available.

5. Method according to one of the preceding claims,
**characterised in that**
after a cold start a temperature in a cooling circuit of the fuel cell system is raised and / or an initial humidity of a feed gas for the fuel cell stack (1) is reduced.

6. Method according to one of the preceding claims,
**characterised in that**
at least one load which is variable with respect to its power take-up is periodically applied to the fuel cell stack (1) and / or an energy storage (4) during the warm-up phase and / or during the warm-running phase, so that the fuel cell stack (1) and / or the energy storage (4) output(s) a greater power in a first time interval than in a second time interval.

7. Method according to claim 6,
**characterised in that**
the fuel cell stack (1) and / or the energy storage (4) emit(s) a power of 0 kW in the second time interval.

8. Method according to one of claims 1 to 5,
**characterised in that**
a load which is variable with respect to its power take-up is periodically applied to the fuel cell stack (1) and an energy storage (4) so that the fuel cell stack (1) outputs a greater power in a first time interval than in a second time interval, wherein the energy storage (4) outputs a lower power in the first time interval than in the second time interval.

9. Method according to claim 8,
**characterised in that**
the fuel cell stack (1) outputs a power of 0 kW in the second time interval and the energy storage (4) outputs a power of 0 kW in the first time interval.

10. Fuel cell system of a motor vehicle, wherein the fuel cell system has at least one fuel cell stack (1) which can be electrically conductively connected to an intermediate circuit (2) to provide direct current for this intermediate circuit (2), wherein the intermediate circuit (2) can be electrically conductively connected to an electric motor (6) via an inverter, and wherein the intermediate circuit (2) can be electrically conductively connected to an energy storage (4),
wherein a control device is provided to trigger the inverter to receive a specified quantity of an output power of the fuel cell system and to convert the quantity of output power received into heat loss by providing an appropriate current into at least one winding of the electric motor (6) to be supplied with power,
**characterised in that**
a first DC/DC converter (3) is arranged between the energy storage (4) and the intermediate circuit (2), and a second DC/DC converter (9) is arranged between the fuel cell stack (1) and the intermediate circuit (2) and is provided to regulate a fuel cell stack voltage that is as low as possible during a warm-up phase and / or a warm-running phase.

11. Fuel cell system according to claim 10,
**characterised in that**
the electric motor (6) is a traction motor.

12. Fuel cell system according to claim 10 or 11,
**characterised in that**
the intermediate circuit (2) can be electrically conductively connected via at least one further inverter to at least one further electric motor (8), wherein the control device and / or a further control device is / are provided
to trigger the at least one further inverter to receive a further quantity of the output power of the fuel cell system and to convert the further quantity of output power received into heat loss by providing an appropriate current into at least one winding to be supplied of the at least one further electric motor (8).

## Revendications

1. Procédé de démarrage à froid d'un système de piles à combustible d'un véhicule automobile, comprenant au moins les phases de fonctionnement suivantes :
1) phase de réchauffage : charger un empilement (1) de piles à combustible d'au moins un consommateur et
2) phase de conduite à chaud délivrer un signal d'autorisation de conduite en fonction d'au moins une grandeur d'influence, selon les étapes de procédé suivantes consistant à :
- enregistrer une quantité définie d'une puissance utile du système de piles à combustible lors de la phase de réchauffage et/ou lors de la phase de conduite à chaud par un moyen d'enregistrement de puissance et
- convertir la quantité de la puissance utile enregistrée en puissance dissipée par application d'un courant adapté dans au moins une bobine à alimenter d'un moteur électrique (6, 8), **caractérisé en ce qu'**un premier convertisseur à courant continu (3) est disposé entre un accumulateur d'énergie (4) et un circuit intermédiaire (2), et entre l'empilement (1) de piles à combustible et le circuit intermédiaire (2) est disposé un second convertisseur à courant continu (9) et qui permet pendant la phase de réchauffage et/ou la phase de conduite à chaud de régler d'une tension d'empilement de piles à combustible la plus basse possible.

2. Procédé selon la revendication 1, **caractérisé en ce que** le moyen d'enregistrement de puissance est un onduleur.

3. Procédé selon la revendication 1 ou 2, **caractérisé en ce que** le signal d'autorisation de conduite lors de la phase de conduite à chaud est délivré en fonction de la puissance utile du système de piles à combustibles ou en fonction de la puissance utile totale disponible provenant de l'empilement (1) de piles à combustible et d'un accumulateur d'énergie (4).

4. Procédé selon l'une quelconque des revendications précédentes, **caractérisé en ce que** le signal d'autorisation de conduite est délivré lors de la phase de conduite à chaud lorsque la disponibilité est inférieure à 50 % de la puissance utile du système de piles à combustible, ou **en ce que** le signal d'autorisation de conduite est délivré lors de la phase de conduite à chaud lorsqu'une disponibilité est inférieure à 50 % de la puissance utile totale de l'empilement (1) de piles à combustible et d'un accumulateur d'énergie (4).

5. Procédé selon l'une quelconque des revendications précédentes, **caractérisé en ce qu'**après un démarrage à froid une température est augmentée dans un circuit de refroidissement du système de piles à combustible et/ou une humidité d'entrée d'un gaz d'alimentation pour l'empilement (1) de piles à combustible est réduite.

6. Procédé selon l'une quelconque des revendications précédentes, **caractérisé en ce que** l'empilement (1) de piles à combustible et/ou un accumulateur d'énergie (4) est chargé périodiquement pendant la phase de réchauffage et/ou pendant la phase de conduite à chaud d'au moins un consommateur variable par rapport à son enregistrement de puissance, de sorte que l'empilement (1) de piles à combustible et/ou l'accumulateur d'énergie (4) délivre(nt) une puissance supérieure dans un premier intervalle de temps à celle dans un second intervalle de temps.

7. Procédé selon la revendication 6, **caractérisé en ce que** l'empilement (1) de piles à combustible et/ou l'accumulateur d'énergie (4) délivre(nt)une puissance de 0 kW dans le second intervalle de temps.

8. Procédé selon l'une quelconque des revendications 1 à 5, **caractérisé en ce que** l'empilement (1) de piles à combustible et un accumulateur d'énergie (4) est chargé périodiquement d'au moins un consommateur variable par rapport à son enregistrement de puissance, de sorte que l'empilement (1) de piles à combustible délivre une puissance supérieure dans un premier intervalle de temps à celle dans un second intervalle de temps, l'accumulateur d'énergie (4) délivrant dans le premier intervalle de temps une puissance inférieure à celle dans la seconde intervalle de temps.

9. Procédé selon la revendication 8, **caractérisé en ce que** l'empilement (1) de piles à combustible délivre dans le second intervalle de temps une puissance de 0 kW et l'accumulateur d'énergie (4) délivre une puissance de 0 kW dans le premier intervalle de temps.

10. Système de piles à combustible d'un véhicule automobile, le systèmes de piles à combustible présentant au moins un empilement (1) de piles à combustible, qui pour la mise à disposition de courant continu pour un circuit intermédiaire (2) peut être relié à celui-ci (2) de manière électroconductrice, le circuit intermédiaire (2) pouvant être relié de manière électroconductrice au moyen d'un onduleur à un moteur électrique (6) et le circuit intermédiaire (2) pouvant être relié de manière électroconductrice à un accumulateur d'énergie (4), un dispositif de commande étant prévu pour amener l'onduleur à enregistrer une quantité définie d'une puissance utile du système de piles à combustible et à convertir la quantité enregistrée de la puissance utile en puissance dissipée par application d'un courant adapté dans au moins une bobine à alimenter d'un moteur électrique (6), **caractérisé en ce qu'**un premier convertisseur à courant continu (3) est disposé entre un accumulateur d'énergie (4) et un circuit intermédiaire (2), et entre l'empilement (1) de piles à combustible et le circuit intermédiaire (2) est disposé un second convertisseur à courant continu (9) et qui permet pendant la phase de chauffage et/ou la phase de conduite à chaud de régler d'une tension d'empilement de piles à combustible la plus basse possible.

11. Système de pile à combustible selon la revendication 10, **caractérisé en ce que** le moteur électrique (6) est un moteur de traction.

12. Système de pile à combustible selon la revendication 10 ou 11, **caractérisé en ce que** le circuit intermédiaire (2) peut être relié de manière électroconductrice au moyen d'au moins un autre onduleur à au moins un autre moteur électrique (8), le dispositif de commande et/ou un autre dispositif de commande étant prévu(s) pour amener l'au moins un autre onduleur à enregistrer une autre quantité de la puissance utile du système de piles à combustible et à convertir l'autre quantité enregistrée de la puissance utile en puissance dissipée par application d'un courant adapté dans l'au moins une bobine à alimenter de l'au moins un autre moteur électrique (8).
